# EUROPEAN PATENT APPLICATION

(11) **EP 1 850 101 A1**
(43) Date of publication of application: **31.10.2007**
(21) Application number: 07008817.4
(22) Date of filing: 05.03.2002
(51) Int. Cl.: G01K 1/14, H05B 3/74

(54) **Temperature sensing probe assembly**

(30) Priority: 20.03.2001 GB 0107042
(62) Divisional of application: 02251529.0
(71) Applicant: Ceramaspeed Limited, Kidderminster, Worcestershire DY11 7DY (GB)
(72) Inventor: Wilkins, Peter Ravenscroft, Droitwich Worcestershire WR9 7DU (GB)
(74) Representative: Jackson, Derek Charles

(57) **Abstract**

A radiant electric heater includes a temperature sensing probe assembly (2) comprising a tube (16) of ceramic material secured to an upstanding rim (8A) of the heater by way of a metal support bracket (20) such that the tube (16) extends at least partly across the heater. The tube (16) has received therein at a first end (40) thereof an electrical component (38) having an electrical parameter which changes as a function of temperature. The component (38) has electrical leads (42, 44) electrically insulated from each other and extending along the tube and from the tube at a second end thereof. The support bracket (20) includes a hole (64) through which passes a fastener (22) securing the assembly (2) to the heaters, and a lug (26) which extends towards and is in contact with the upstanding rim (8A) of the heater, the ceramic tube (16) passing though the support bracket (20).

## Description

This invention relates to a temperature sensing probe assembly for use with an electric heater, such as a radiant electric heater in a cooking appliance. More particularly, the invention relates to a temperature sensing probe assembly in which an electrical component having an electrical parameter which changes as a function of temperature is located inside a tube which is arranged to extend at least partly across a heater.

It is known to provide a temperature sensing probe assembly in which an electrical component, such as a temperature-sensitive electrical resistor, which may be a platinum resistance temperature detector (PRTD) or some other form of resistance temperature detector (RTD), is located inside a metal tube, such as of stainless steel, at or near one end thereof. The metal tube is arranged to extend at least partly across a radiant heater with that end which encloses the electrical component being located within the heater and with the opposite end of the metal tube being secured at a periphery of the heater. Electrical leads from the component pass through the metal tube and emerge therefrom at the periphery of the heater for connection to appropriate signal processing circuitry.

The use of a metal tube for the probe assembly is advantageous in that it is inexpensive to manufacture, is robust and is easy to secure to a heater. A simple metal bracket can be attached at an outer end of the metal tube, such as by welding, to enable the tube to be secured to a peripheral region of the heater. Such securing can be by means of one or more screws engaging a metal support dish of the heater.

The use of a metal tube for the probe assembly is, however, disadvantageous in that the outside of the tube may be shiny and radiation-reflective when new, but during exposure to high temperatures inside the heater it becomes gradually duller and more radiation-absorptive. This results in a gradual change in the temperature versus time response characteristic of the probe assembly as derived from the output from the temperature-sensitive electrical component inside the tube.

A further disadvantage of a metal tube is that being electrically conductive it has to be electrically insulated from the leads of the electrical component therein and also maintained at a safe electrical clearance distance from a heating element of the heater and also from an overlying glass-ceramic sheet which may be provided.

It is known to use a ceramic tube instead of a metal tube for the probe assembly and this substantially overcomes the aforementioned disadvantages of the metal tube. However, a ceramic tube is difficult to secure to the edge of a heater since a simple metal supporting bracket cannot be readily secured thereto, such as by welding, in the same way as to a metal tube.

It is an object of the present invention to overcome or minimise this problem.

According to the present invention there is provided a temperature sensing probe assembly for use with a heater, comprising a tube of ceramic material secured to a metal support bracket, the support bracket being adapted to be secured to the heater at a peripheral region of the heater and such that the tube extends at least partly across the heater, the tube having received therein at a first end thereof an electrical component having an electrical parameter which changes as a function of temperature, the component having electrical leads electrically insulated from each other and extending along the tube and from the tube at a second end thereof, the support bracket incorporating a tubular metal portion which securely receives the tube therein.

The ceramic tube may be secured to the support bracket at the second end of the tube. In this case, the tubular metal portion may have a supporting region tightly surrounding the tube of ceramic material at the second end thereof and may also have a narrowed region, such as a crimped region thereof, adjoining the supporting region and which limits insertion of the tube into the tubular metal portion.

Alternatively, the ceramic tube may be secured to the support bracket intermediate the ends of the tube.

One or both opposite ends of the tubular metal portion may be flared outwards.

At least the tubular metal portion incorporated in the metal support bracket may comprise stainless steel, or mild steel plated with another metal, such as nickel.

The metal support bracket may be adapted to be secured to the heater by means of one or more threaded fasteners.

The tube of ceramic material may comprise steatite or cordierite.

The electrical component may comprise a device whose electrical resistance changes as a function of temperature, or may comprise a thermocouple.

The device whose electrical resistance changes as a function of temperature may comprise a resistance temperature detector (RTD), such as a platinum resistance temperature detector (PRTD), or may comprise a thermistor.

The resistance temperature detector may comprise a chip-form substrate of electrically insulating material, such as ceramic or glass, having thereon a film or foil of a material whose electrical resistance changes as a function of temperature.

A ceramic tubular member, such as of alumina, having boreholes extending lengthwise therethrough, may be provided inside the tube of ceramic material, the electrical leads of the electrical component passing through the boreholes.

A sleeve of glass fibre fabric material, or ceramic fibre fabric material, may be provided inside the tubular metal portion at an end thereof opposite to that end receiving the tube of ceramic material.

The present invention also provides a heater, such as a radiant electric heater, provided with the temperature sensing probe assembly.

For a better understanding of the invention and to show more clearly how it may be carried into effect, reference will now be made, by way of example, to the accompanying drawings in which:
Figure 1 is a perspective view of an embodiment of temperature sensing probe assembly according to the present invention;
Figures 2 and 3 are cross-sectional views of the probe assembly of Figure 1, taken along two planes perpendicular to one another;
Figure 4 is a plan view of a heater fitted with the temperature sensing probe assembly of Figure 1;
Figure 5 is a cross-sectional view of the heater of Figure 4;
Figure 6 is a side elevational view of another embodiment of a temperature sensing probe assembly according to the present invention; and
Figure 7 is an end elevational view of the temperature probe assembly of Figure 6.

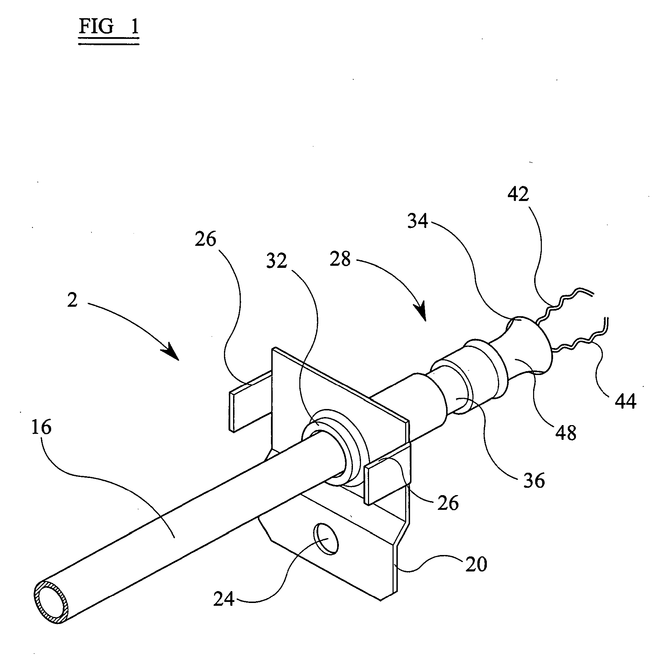

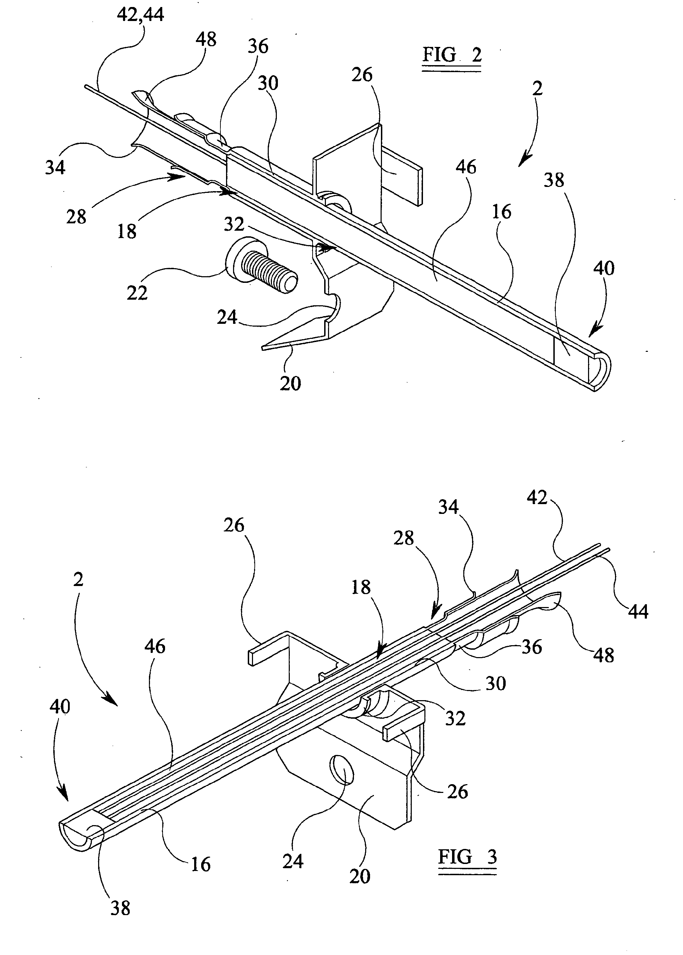

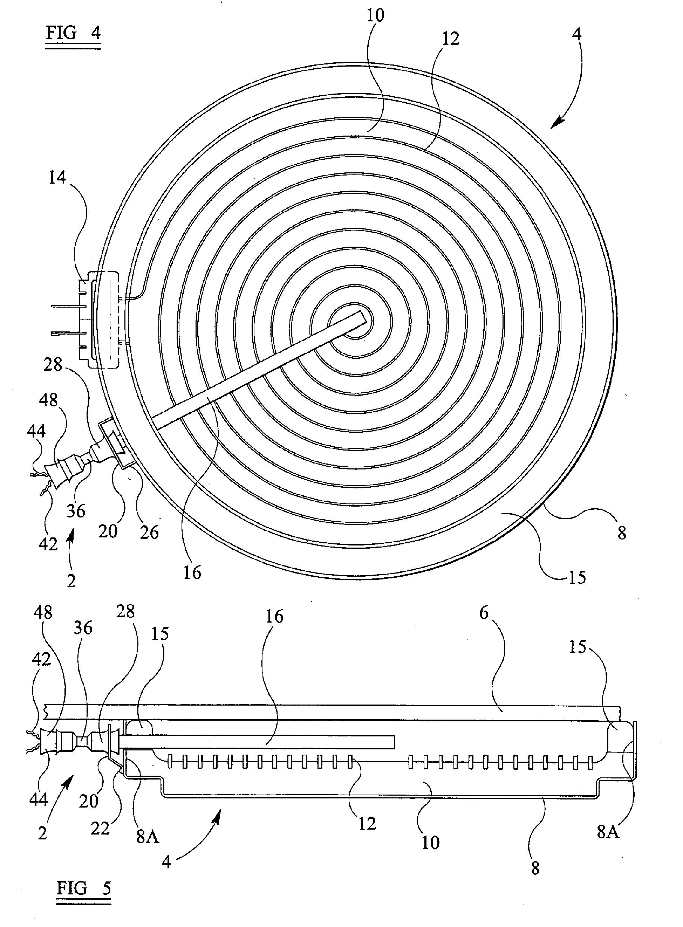

A temperature sensing probe assembly 2, as shown in detail in Figures 1 to 3, is provided for use with a radiant electric heater 4, as shown in Figures 4 and 5. Such a radiant electric heater 4 is of well-known form and is suitably arranged for use in a cooking appliance, such as a cooking hob, behind a cooking surface 6 which may be of glass-ceramic material.

The heater 4 typically comprises a metal dish-like support 8 in which is a layer 10 of thermal and electrical insulation material, such as microporous thermal and electrical insulation material. An electrical heating element 12 is supported on the layer 10 of insulation material and electrically connected to a terminal block 14 at the edge of the dish-like support 8. The electrical heating element 12 may comprise any of the well-known forms of element, such as a wire, ribbon, foil or lamp element, or combinations thereof. In particular, the heating element 12 comprises a corrugated ribbon heating element supported edgewise on the layer 10 of insulation material.

A wall 15 of thermal insulation material is provided around the periphery of the heater and contacts the underside of the cooking surface 6.

The temperature sensing probe assembly 2 comprises a tube 16 of ceramic material, such as steatite or cordierite, having a (second) end 18 thereof secured to a metal support bracket 20. The support bracket 20 is arranged to be secured to the metal dish-like support 8 of the heater 4 by any suitable means, such as a threaded fastener 22, passing through a hole 24 in the support bracket 20, such that the tube 16 extends at least partly across the heater 4, between the heating element 12 and the cooking surface 6.

A pair of lugs 26 are provided on the metal support bracket 20 and are arranged to contact an upstanding rim 8A of the dish-like support 8 of the heater 4, whereby the support bracket 20 is securely braced relative to the dish-like support 8.

The support bracket 20 incorporates a tubular metal portion 28 which has a supporting region 30 receiving and tightly surrounding the second end 18 of the ceramic tube 16.

The tubular metal portion 28 may be provided integral with, or secured to, the support bracket 20 and suitably comprises stainless steel, or mild steel plated with a metal such as nickel.

One or both opposite ends 32, 34 of the tubular metal portion 28 may be flared outwards to facilitate access to the interior thereof.

The tubular metal portion 28 has a narrowed crimped region 36 which limits insertion of the second end 18 of the ceramic tube 16 into the supporting region 30 of the tubular metal portion 28.

An electrical component 38, having an electrical parameter which changes as a function of temperature, is located inside the ceramic tube 16 at a (first) end 40 thereof. The component 38 has electrical leads 42, 44 which extend therefrom and out of the probe assembly 2 for connection to electrical control circuitry (not shown) for the heater 4.

The leads 42, 44 are electrically insulated from each other and are arranged to pass through boreholes extending lengthwise through a ceramic tubular member 46, such as of alumina, which forms a sliding fit inside the ceramic tube 16.

A sleeve 48 of glass fibre fabric material, or ceramic fibre fabric material, is provided inside and extending from that end of the tubular metal portion 28 where the leads 42, 44 emerge.

The electrical component 38 suitably comprises a device whose electrical resistance changes as a function of temperature. However it could alternatively comprise a thermocouple.

Such a device whose electrical resistance changes as a function of temperature can comprise a thermistor, or a resistance temperature detector (RTD) such as a platinum resistance temperature detector (PRTD).

When the component 38 is in the form of a resistance temperature detector, it may suitably comprise a chip-form substrate of electrically insulating material, such as ceramic or glass, having thereon a film or foil of a material, such as platinum, whose electrical resistance changes as a function of temperature.

The resulting temperature sensing probe assembly 2 provides a compact unit with the ceramic tube 16, containing the temperature-sensitive component 38, securely received in the tubular metal portion 28 incorporated in the metal support bracket 20. The metal support bracket 20 provides rigid mounting of the assembly 2 on the dish-like support 8 of the heater 4.

In operation, the leads 42, 44 from the temperature-sensitive electrical component 38 are electrically connected to associated control circuitry (not shown) for the heating element 12 of the heater 4. Temperature control of the heater 4 is thereby effected as required.

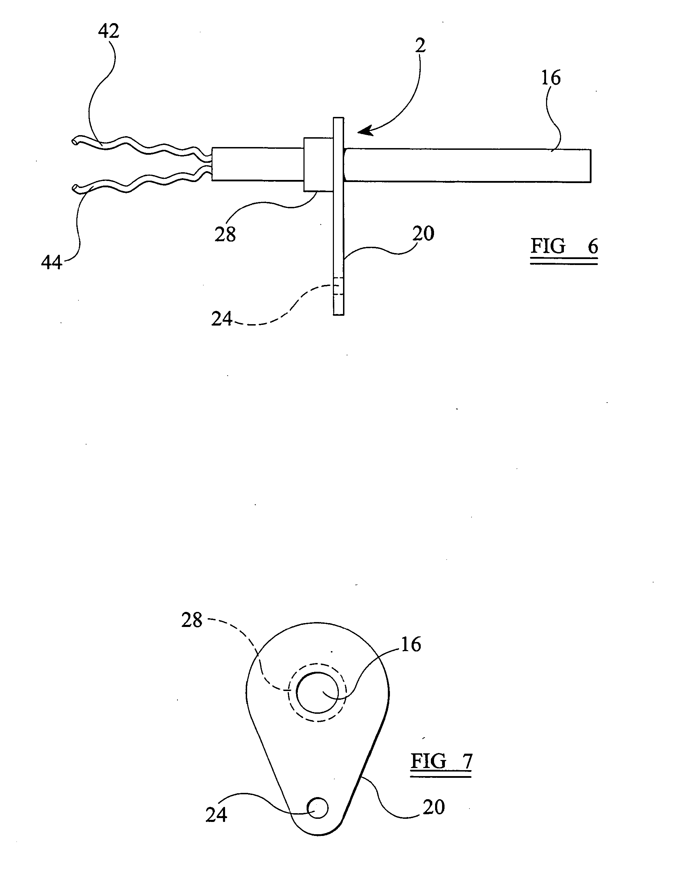

The temperature sensing probe assembly 2 shown in Figures 6 and 7 is similar to that of Figures 1 to 3 in that the assembly comprises a tube 16 of ceramic material, such as steatite or cordierite. The tube 16 is secured intermediate the ends thereof to a metal support bracket which, in use, is secured directly of indirectly to the metal dish-like support of the heater by any suitable means passing through a hole 24 in the support bracket 20 such that the tube 16 extends at least partly across the heater 4 between the heating element 12 and the cooking surface 6.

The support bracket 20 incorporates a tubular metal portion 28 which tightly surrounds and supports the ceramic tube 16 intermediate the ends thereof. The tubular metal portion 28 is ideally provided integral with the support bracket 20.

An electrical component (not shown) having an electrical parameter which changes as a function of temperature, is located inside the ceramic tube 16 in the region of a (first) end thereof adapted to be within the heater. The electrical component has leads 42, 44 which extend therefrom and out of a (second) end of the probe assembly for connection to electrical control circuitry (not shown) for the heater.

## Claims

1. A radiant electric heater including a temperature sensing probe assembly (2) comprising a tube (16) of ceramic material secured to an upstanding rim (8A) of the heater (4) by way of a metal support bracket (20) such that the tube (16) extends at least partly across the heater (4), the tube (16) having received therein at a first end (40) thereof within the heater (4) an electrical component (38) having an electrical parameter which changes as a function of temperature, the component (38) having electrical leads (42, 44) electrically insulated from each other and extending along the tube (16) and from the tube (16) at a second end (18) thereof, the support bracket (20) including:
a hole (64) through which passes a fastener (22) securing the temperature sensing probe assembly (2) to the heater (4); and
a lug (26) extending towards and in contact with the upstanding rim (8A) of the heater, the ceramic tube (16) passing through the support bracket (20).

2. A heater as claimed in claim 1, **characterised in that** two laterally arranged lugs (26) are provided, the ceramic tube (16) passing through the support bracket (20) at a point substantially intermediate the two lugs.

3. A heater as claimed in claim 1 or 2, **characterised in that** the ceramic tube (16) is secured to the support bracket (20) at the second end (18) of the tube.

4. A heater as claimed in any preceding claim, **characterised in that** the tube of ceramic material (16) comprises steatite or cordierite.

5. A heater as claimed in any preceding claim, **characterised in that** the electrical component (38) comprises a device whose electrical resistance changes as a function of temperature, such as a resistance temperature detector (RTD), especially a platinum resistance temperature detector (PRTD), or a thermistor.

6. An assembly as claimed in claim 5, **characterised in that** the resistance temperature detector comprises a chip-form substrate of electrically insulating material, such as of ceramic or glass, having thereon a film or foil of a material whose electrical resistance changes as a function of temperature.

7. A heater as claimed in any of claims 1 to 4, **characterised in that** the electrical component (38) comprises a thermocouple.

8. A heater as claimed in any preceding claim, **characterised in that** a ceramic tubular member (46), for example of alumina, having boreholes extending lengthwise therethrough is provided inside the tube of ceramic material (16), the electrical leads (42, 44) of the electrical component (38) passing though the boreholes.

9. A heater as claimed in any preceding claim, **characterised in that** a sleeve (48) of glass fibre fabric material, or ceramic fibre fabric material, is provided inside the tubular metal portion (28) at an end thereof opposite to that end receiving the tube of ceramic material (16).
